# EUROPÄISCHE PATENTSCHRIFT

(11) **EP 0 691 494 B1**
(45) Veröffentlichungstag und Bekanntmachung des Hinweises auf die Patenterteilung: **14.01.1998**
(21) Anmeldenummer: 95110061.9
(22) Anmeldetag: 28.06.1995
(51) Int. Cl.: F16K 17/38, F16K 31/00, G05D 23/13

(54) **Sanitärventil**
Sanitary valve
Valve sanitaire

(30) Priorität: 07.07.1994 DE 4423852
(43) Veröffentlichungstag der Anmeldung: 10.01.1996
(73) Patentinhaber: Hans Grohe GmbH & Co. KG, 77761 Schiltach (DE)
(72) Erfinder: Lorch, Werner, D-78713 Schramberg (DE)
(74) Vertreter: Patentanwälte Ruff, Beier, Schöndorf und Mütschele

(56) Entgegenhaltungen:
- EP-A- 0 443 416
- DE-B- 1 097 227
- GB-A- 2 209 200

## Beschreibung

Die Erfindung betrifft ein Sanitärventil mit einem Ventilgehäuse, das eine feststehende Steuerfläche und eine Einlaßöffnung für Warmwasser aufweist, sowie mit einem die Menge des das Ventil verlassenden Wassers steuernden Steuerelement, das gegenüber dem Gehäuse in mindestens einem Freiheitsgrad bewegbar angeordnet ist.

Bei Ventilen dieser Art, bei denen es sich beispielsweise auch um Mischventile handeln kann, besteht grundsätzlich die Gefahr, daß ein Benutzer durch unerwartet heißes Wasser erschreckt oder sogar geschädigt wird.

Es sind bereits verschiedene Möglichkeiten vorgeschlagen worden, dies zu verhindern. Hierzu gehören Einrichtungen, die die Öffnungsstellung des Ventils mechanisch begrenzen. Ebenfalls bekannt sind Thermostatventile.

Ein solches Thermostatventil ist beispielsweise aus DE-B-1097227 bekannt. Das temperaturempfindliche Element sitzt in der Auslaufschnauze des Gehäuses der Armatur.

Es ist bereits ein Einhebel-Mischventil mit den im Oberbegriff des Anspruchs 1 enthaltenen Merkmalen bekannt (EP-A1-443416). Dieses Ventil enthält ein Ventilgehäuse, in dem ein Ventilkörper zur Änderung der Menge des das Ventil verlassenden Wassers verdreht wird. Zum Ändern der Temperatur wird der Ventilkörper verschoben. Der Verbrühschutz verschließt bei Erreichen einer vorbestimmten Temperatur die Ausgangsöffnung des Ventilgehäuses.

Ebenfalls bekannt ist eine Schutzvorrichtung gegen Verbrühungen (DE-OS 31 08 419), die beispielsweise in eine Brauseleitung eingesetzt werden kann. Sie enthält ein temperaturgesteuertes Organ, das bei Überschreiten einer bestimmten Temperatur ein vorgespanntes Verschlußelement auslöst, das ruckartig die Leitung verschließt. Bei sich wieder verringernder Temperatur ist ein automatisches Zurücksetzen nicht möglich.

Der Erfindung liegt nun die Aufgabe zugrunde, ein sanitäres Mischventil, insbesondere der eingangs genannten Art, zu schaffen, das bei einfachem und platzsparendem Aufbau und möglichst einfacher Betätigung eine Sicherung gegen zu hohe Temperaturen bietet.

Zur Lösung dieser Aufgabe schlägt die Erfindung ein Einhebelmischventil mit den im Anspruch 1 angegebenen Merkmalen vor. Weiterbildungen der Erfindung sind Gegenstand von Unteransprüchen.

Das von der Erfindung vorgeschlagene Sanitärventil enthält also einen auf zu hohe Temperaturen automatisch ansprechenden Verbrühschutz, der innerhalb des Sanitärventils wirkt und durch Verschließen oder Verkleinern der Öffnung, durch die Warmwasser gelangt, eine Temperaturbegrenzung bewirkt. Der Benutzer braucht also weder eine spezielle Handhabung des Ventils vor oder nach der Entnahme von Wasser durchzuführen. Er wird von dem Ventil, ohne daß er etwas davon merkt, automatisch gegen zu hohe Temperaturen geschützt.

In Weiterbildung der Erfindung kann vorgesehen sein, daß der Verbrühschutz ein der Temperatur des Wassers stromab der Einlaßöffnung, insbesondere der Temperatur des Mischwassers, ausgesetztes temperaturempfindliches Element aufweist. Dieses temperaturempfindliche Element spricht auf die Temperatur des Wassers an und kann bei Erreichen einer bestimmten Grenztemperatur die eingangs erwähnte Verringerung bzw. Drosselung des Warmwassers durchführen.

Insbesondere kann vorgesehen sein, daß das Temperaturelement sich bei Temperaturänderung mechanisch bewegt, also beispielsweise ausdehnt oder zusammenzieht oder in einer anderen Richtung auslenkt. Dann kann das temperaturempfindliche Element sowohl zur Feststellung der Grenztemperatur als auch zur direkten mechanischen Auslösung eines Steuervorgangs herangezogen werden.

In Weiterbildung der Erfindung kann vorgesehen sein, daß das Ventil ein an dem Steuerelement, insbesondere der bewegbaren Steuerfläche, angeordnetes Ventilelement aufweist, das relativ zu der bewegbaren Steuerfläche bewegbar ist und von dem Temperaturelement beaufschlagt wird. In diesem Fall führt das Erreichen der Grenztemperatur zur Verschiebung dieses Ventilelements, das dann beispielsweise die Einlaßöffnung für Warmwasser verschließen kann, ohne daß das Steuerelement in irgendeiner Weise betätigt oder bewegt wird.

Insbesondere kann das Ventilelement derart angeordnet und ausgebildet sein, daß es die in der feststehenden Steuerfläche mündende Einlaßöffnung für Warmwasser verschließen kann.

Es ist ebenfalls möglich und wird von der Erfindung vorgeschlagen, daß das Ventilelement zum Verschließen einer Eingangsöffnung für das Warmwasser der bewegbaren Steuerfläche ausbebildet sein kann.

In nochmaliger Weiterbildung kann erfindungsgemäß vorgesehen sein, daß das Ventil ein von dem temperaturempfindlichen Element beaufschlagtes Betätigungselement aufweist, das zur Bewegung des Steuerelements und/oder der bewegbaren Steuerfläche ausgebildet und angeordnet ist. In diesem Fall kann also die normale Betätigungskinematik des Ventils zur Verwirklichung des Verbrühschutzes herangezogen werden. Dies bedeutet dann, daß gegebenenfalls der Benutzer auch erkennt, daß hier ein Eingriff in die Funktion des Ventils erfolgt.

Es kann vorgesehen sein, daß das Betätigungselement an dem Gehäuse angeordnet ist und an dem Steuerelement und/oder der bewegbaren Steuerfläche angreift.

Ebenfalls möglich ist es, das Betätigungselement an dem Steuerelement und/oder der bewegbaren Steuerfläche anzuordnen, so daß es dann an dem Gehäuse oder einem Teil des Gehäuses angreift. Dieses Angreifen an dem Gehäuse kann dann direkt oder über Zwischenglieder erfolgen.

Erfindungsgemäß kann vorgesehen sein, daß das von dem temperaturempfindlichen Element beaufschlagte Betätigungselement derart ausgebildet ist, daß es das Steuerelement in Richtung eines Verschließehs des Mischventils bewegt. Bei vielen herkömmlichen Einhebelmischventilen ist das Verschließen des Ventils eine translatorische Bewegung, während zum Ändern der Temperatur eine Drehbewegung nötig ist. Die translatorische Bewegung durch das temperaturempfindliche Element läßt sich gegebenenfalls einfacher verwirklichen.

Die Erfindung schlägt jedoch ebenfalls vor, daß das von dem temperaturempfindlichen Element beaufschlagte Betätigungselement derart ausgebildet sein kann, daß es das Steuerelement in Richtung einer Temperaturverringerung bewegt.

Das von der Erfindung vorgeschlagene einen Verbrühschutz aufweisende Sanitärventil kann erfindungsgemäß mit zwei flachen, insbesondere ebenen Steuerscheiben versehen sein. In diesem Fall kann vorgesehen sein, daß die beiden Einlaßöffnungen in der Steuerfläche der feststehenden Steuerscheibe münden, während die bewegbare Steuerscheibe mit Hilfe von Ausnehmungen, Kanten, Durchbrüchen o. dgl. eine Steuerung von Menge und Temperatur des ausströmenden Wassers bewirkt. Es ist natürlich auch möglich, daß auch die Rückführung des Mischwassers durch die feststehende Steuerscheibe folgt.

Die Erfindung sieht vor, daß das temperaturempfindliche Element in einer Steuerausnehmung der bewegbaren Steuerscheibe angeordnet sein kann. Hier ist es also direkt der Temperatur des Mischwassers ausgesetzt.

Das von der Erfindung vorgeschlagene Ventil kann jedoch auch als sogenanntes Kugelkükenventil ausgebildet sein, bei dem die Steuerflächen Kugelflächen sind. Hier schlägt die Erfindung insbesondere mit Vorteil vor, daß das temperaturempfindliche Element im Innern der Kugel angeordnet sein kann. Dies bedeutet eine außerordentlich platzsparende Anordnung des temperaturempfindlichen Elements, so daß sich an der Größe und gegebenenfalls der Konstruktion des Mischventils nichts zu ändern braucht. Auch das gegebenenfalls vorgesehene Ventilelement kann in der Kugel angeordnet sein.

Für eine besonders gute Ansprechcharakteristik des von der Erfindung vorgeschlagenen Verbrühschutzes kann erfindungsgemäß vorgesehen sein, als temperaturempfindliches Element oder als Teil des temperaturempfindlichen Elements eine Feder zu verwenden, die aus einer sogenannten Memory-Legierung hergestellt ist. Derartige Materialien führen in einem speziellen engen Temperaturbereich eine große Formänderung durch. Eine aus einem solchen Material, das als Shaped Memory Alloy (SMA) bezeichnet wird, hergestellte Feder kann also bei einer bestimmten Temperatur, nämlich der erwähnten vorbestimmten Temperatur, einen ruckartigen Anstieg der Federkraft bewirken, so daß die Feder nicht nur als Temperaturfühler, sondern gleichzeitig auch als Element wirkt, das eine mechanische Bewegung durchführt. Hierbei ist es besonders günstig, wenn entgegengesetzt zu der SMA-Feder eine normale Feder angeordnet ist, die einen Gleichgewichtszustand herstellt, der erst bei Erreichen der bestimmten Temperatur überwunden wird.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: einen stark vereinfachten schematischen Querschnitt durch einen Teil eines Mischventils mit einer feststehenden und einer bewegbaren Steuerscheibe;
- Fig. 2: einen Schnitt durch die Anordnung der Fig. 1 längs Linie II-II in Fig. 2;
- Fig. 3: einen der Fig. 1 entsprechenden Schnitt bei einer zweiten Ausführungsform;
- Fig. 4: einen vereinfachten Schnitt durch ein Mischventil mit einem Kugelküken;
- Fig. 5: einen Schnitt durch eine zweite Ausführungsform eines Mischventils mit einem Kugelküken;
- Fig. 6: einen Schnitt durch die Kugel der Fig. 5 etwa in Höhe ihres Äquators.

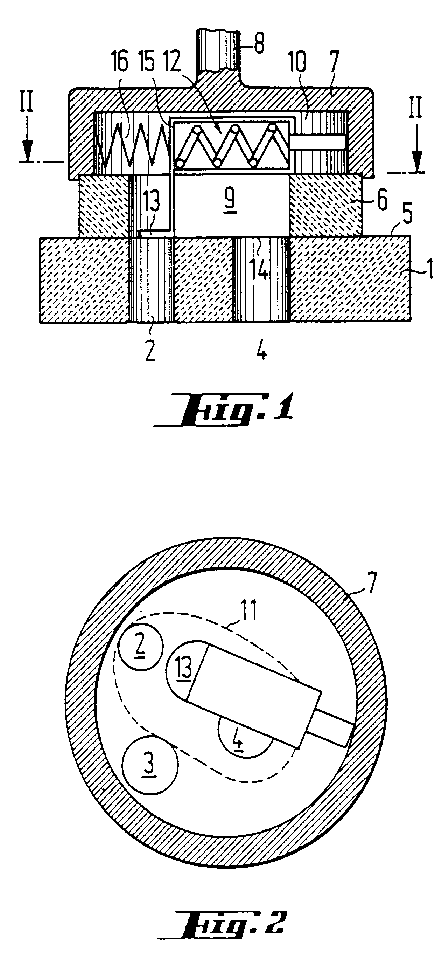

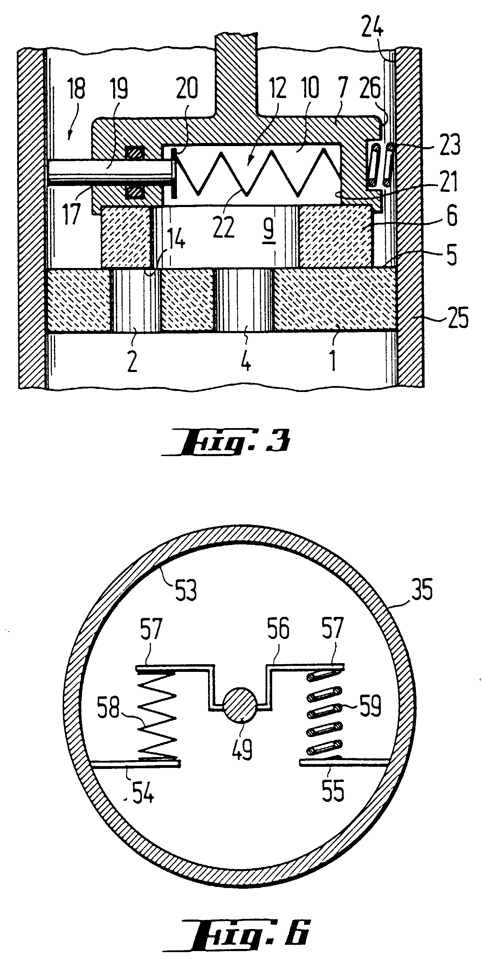

Fig. 1 zeigt in einem Schnitt die hier interessierenden Teile eines sanitären Mischventils. Dieses Mischventil enthält in einem nicht dargestellten Gehäuse, das zur Befestigung des Mischventils dient, Halterungen für Einlaßleitungen, Auslaßleitungen usw. Teil des Mischventils ist eine in dem Gehäuse angeordnete feststehende Steuerscheibe 1, die beispielsweise aus Keramik hergestellt sein kann. Die Steuerscheibe enthält eine Einlaßöffnung 2 für Warmwasser, eine nur in Fig. 2 zu sehende Einlaßöffnung 3 für Kaltwasser sowie eine Auslaßöffnung 4 für das Mischwasser. Diese drei Öffnungen münden in der in Fig. 1 oberen Fläche 5 der feststehenden Steuerscheibe 1, wobei die Fläche 5 die eigentliche Steuerfläche bildet.

Auf dieser Steuerfläche 5 gleitet eine zweite bewegbare Steuerscheibe 6, die ebenfalls aus Keramik hergestellt ist. Die Steuerscheibe 6 ist an einem Steuerelement 7 gehaltert, das die Steuerscheibe 6 längs ihres oberen Außenrandes umgreift und dort abgedichtet mit dieser verbunden ist. Das Steuerelement 7 weist einen Ansatz 8 auf, der direkt oder über ein Gestänge mit irgendeinem außerhalb des Armaturengehäuses angeordneten Betätigungsgriff verbunden ist. Durch diesen Betätigungsgriff läßt sich das Steuerelement 7 zusammen mit der bewegbaren Steuerscheibe 6 gegenüber der feststehenden Steuerscheibe 1 bewegen, d. h. verschieben und verdrehen.

Die bewegbare Steuerscheibe 6 enthält eine zentrale Ausnehmung 9, die sich in eine Ausnehmung 10 im Steuerelement 7 fortsetzt. Die Ausnehmung 9 in der bewegbaren Steuerscheibe bildet eine in Fig. 2 gestrichelt dargestellte Steuerkante 11, die je nach Position die Einlaßöffnungen 2, 3 mehr oder weniger weit öffnet oder schließt. Dadurch wird eine Mengenund Temperatursteuerung des die Auslaßöffnung 4 verlassenden Mischwassers bewirkt.

In der Ausnehmung 10 des Steuerelements ist ein Temperaturfühler 12 angeordnet, der mit einem Ventilelement 13 verbunden ist. Das Ventilelement 13 liegt mit seiner der feststehenden Steuerscheibe 1 zugewandten Unterseite in der gemeinsamen Ebene der feststehenden Steuerfläche 5 und der bewegbaren Steuerfläche 14. Das Ventilelement 13 ist verschiebbar gelagert. Die Verschiebungsrichtung ist so gewählt, daß bei einer der maximalen Wassertemperatur entsprechenden Stellung des Steuerelements 7 die Einlaßöffnung 2 für Warmwasser in der Verschiebungsrichtung des Ventilelements 13 liegt. Dies ist in Fig. 2 dargestellt. Als temperaturempfindliches Element 12 wird eine Feder aus SMA verwendet, die einen Ansatz 15 des Ventilelements 13 in Verschließrichtung des Ventilelements 13 gegenüber der Einlaßöffnung 2 beaufschlagt. Auf der anderen Seite des Ansatzes 15 wirkt eine Feder 16 aus Federstahl, die den Ansatz 15 und damit das Ventilelement 13 in einer Gleichgewichtsstellung hält. Die SMA-Feder ist so ausgewählt, daß sie bei einer vorbestimmten Temperatur von beispielsweise 40 °C eine plötzliche Bewegung ausführt, die das Ventilelement 13 zum Verschließen der Einlaßöffnung 2 für Warmwasser nach vorne bewegt.

Bei Funktion des Mischventils herrscht im Innern der Ausnehmung 9 der Steuerscheibe 6 und der Ausnehmung 10 des Steuerelements 7 die Mischtemperatur, also die Temperatur des durch die Steuerung gemischten Wassers, das die Auslaßöffnung 4 verläßt. Wird dieses Wasser zu heiß, so bewegt sich das Ventilelement 13 nach vorne und verschließt die Öffnung 2. Ist das Steuerelement 7 aber so verdreht, daß das Ventilelement 13 nicht in Richtung auf die Einlaßöffnung 2 für warmes Wasser orientiert ist, so stellt dies eine Position des Mischventils dar, in der die Einlaßöffnung für kaltes Wasser auch geöffnet ist, so daß eine zu hohe Mischtemperatur gar nicht eintreten kann.

Das Mischventil der Fig. 1 und 2 verschließt also im Bedarfsfall die Einlaßöffnung 2 für heißes Wasser, ohne daß das Steuerelement 7 oder die bewegbare Steuerscheibe 6 bewegt werden.

Bei der zweiten Ausführungsform eines ebenfalls Steuerscheiben enthaltenden Ventils in Fig. 3 ist ein anderer Aufbau gewählt. Aus Gründen der Vereinfachung werden für die gleichen Elemente die gleichen Bezugszeichen verwendet.

Das Steuerelement 7 weist einen radialen Durchgang 17 auf, der das Innere der Ausnehmung 10 mit dem Raum außerhalb des Steuerelements 7 Und der bewegbaren Steuerscheibe 6 verbindet.

In den zylindrischen Durchgang 17 ist ein Betätigungselement 18 in Form eines zylindrischen Stößels 19 eingesetzt. Dieser Stößel 19 weist auf seiner radialen Innenseite, die innerhalb der Ausnehmung 10 liegt, eine verbreiterte Kopfplatte 20 auf. Zwischen dieser Kopfplatte 20 und der gegenüberliegenden Wand 21 der Ausnehmung 10 erstreckt sich das temperaturempfindliche Element 12 wiederum in Form einer Schraubendruckfeder 22 aus SMA. Die Feder 22 ist nur symbolisch dargestellt. Sie ist an den beiden Teilen, zwischen denen sie sich erstreckt, in irgendeiner Weise gehaltert und auch gegen Ausknicken gesichert.

Das Gleichgewicht zu dieser SMA-Feder 22 wird wiederum durch eine Schraubendruckfeder 23 aus Federstahl hergestellt, die außerhalb des Steuerelements 7 angeordnet ist und zwischen der Innenwand 24 des Gehäuses 25 und der Außenwand 26 des Steuerelements 7 wirkt.

Tritt nun innerhalb der Ausnehmung 9 oder 10 eine zu hohe Mischtemperatur auf, so vergrößert sich ruckartig die Federkraft der SMA-Feder 22, die somit über das Betätigungselement 18, das an der Innenseite 24 des Gehäuses 1 anliegt, und der Innenwand 21 des Steuerelements 7 wirkt und damit das Betätigungselement 7 in Fig. 1 nach rechts bewegt. Dadurch wird die bewegbare Steuerscheibe 6 mit ihrer Steuerkante 11 über die Einlaßöffnung 2 für warmes Wasser hinwegbewegt, so daß wiederum ein Verschließen der Einlaßöffnung für warmes Wasser und damit eine Verringerung der Mischtemperatur erreicht wird. In diesem Fall geschieht dies nicht durch ein zusätzliches Ventilelement unabhängig von den Steuerscheiben, sondern durch eine Bewegung der bewegbaren Steuerscheibe 6 in gleicher Weise, wie wenn der Benutzer es selbst machen würde.

Auch in diesem Fall gilt wie bei der Ausführungsform nach Fig. 1 und 2, daß dann, wenn die Temperatur des warmen Wassers an der Einlaßöffnung 2 wieder absinkt, sich das Ventil auch wieder zurückstellt.

Während die Ausführungsformen nach Fig. 1 bis 3 Scheibenventile darstellen, zeigen die jetzt folgenden Ausführungsformen die Anwendung der Erfindung bei Ventilen mit Kugelküken.

Das Mischventil, das ebenfalls nur teilweise dargestellt ist, enthält ein Zentralelement 30, das eine Innenausnehmung in Form einer Halbkugel aufweist. In dieser Halbkugelfläche, die die feststehende Steuerfläche darstellt, mündet ein Einlaß 31 für warmes Wasser, ein Einlaß 32 für kaltes Wasser sowie ein an einer anderen Stelle angeordneter Auslaß für das Mischwasser. Die Einlässe und Auslässe enthalten Manschetten 33 aus gummielastischem Material, die mit Hilfe nicht dargestellter Druckfedern gegen die Außenseite 34 eines Kugelkükens 35 angedrückt werden. Insoweit ist das Ventil an sich bekannt, so daß auf eine weitere Beschreibung dieser Einzelheiten verzichtet wird. Das Kugelküken enthält eine Einlaßöffnung 36, die mit dem Einlaß 31 für warmes Wasser zusammenwirkt, eine Einlaßöffnung 37, die mit dem Einlaß 32 für kaltes Wasser zusammenwirkt, sowie eine an einer anderen Stelle angeordnete Auslaßöffnung. Hierbei kann es sich auch um mehrere Öffnungen handeln.

In dem Kugelküken 35 ist eine Halterung 38 befestigt, die mit Hilfe einer zylindrischen Schürze 39 einen zylindrischen Innenraum 40 bildet. In dem Innenraum 40 ist verschiebbar ein Kolbenelement 41 gelagert, dessen zylindrischer Mantel beispielsweise Durchtrittsöffnungen 42 aufweist. Im Innern des stirnseitig durch eine außen leicht konvex gewölbte Platte 43 abgeschlossenen Kolbens 41 ist eine Druckfeder 44 angeordnet, die ebenfalls aus SMA besteht. Sie wirkt zwischen dem Boden 45 des Innenraums 40 und der Innenseite der Platte 43. Die Außenseite der Platte 43 liegt der Einlaßöffnung 36 für Warmwasser in das Innere des Kugelkükens 35 gegenüber.

Der Kolben 41 weist an seiner Außenseite eine umlaufende Rippe 46 auf, die als Anlage für eine Druckfeder 47 aus Federstahl dient. Die Druckfeder 47 erstreckt sich also zwischen der Rippe 46 und der Innenwand des Kugelkükens. Sie wirkt in Gegenrichtung zu der Druckfeder 44 aus SMA und stellt wiederum ein Gleichgewicht her.

Im Innern des Kugelkükens 35 herrscht die Temperatur des Mischwassers. Das Innere des Kolbens 41 und der Halterung 38 ist ebenfalls von diesem Mischwasser gefüllt, so daß die Feder 44 die Temperatur des Mischwassers aufweist. Übersteigt diese wieder einen vorbestimmten kritschen Wert, so bewegt die Feder 44 bei ihrer plötzlichen Zustandsänderung den Kolben 41 in Richtung auf die Einlaßöffnung 36, so daß die Platte 43 die Öffnung 36 schließlich verschließt. Wiederum ist ein Verbrühschutz gegeben, der bei Erreichen der genannten Temperatur die Einlaßöffnung für Warmwasser in das Innere des Kugelkükens verschließt und damit die Temperatur des Mischwassers herabsetzt. Ähnlich wie bei der Ausführungsform nach Fig. 1 und 2 erfolgt dieser Verbrühschutz also durch ein zusätzliches Ventilelement, das unabhängig von der Betätigung des Mischventils arbeitet.

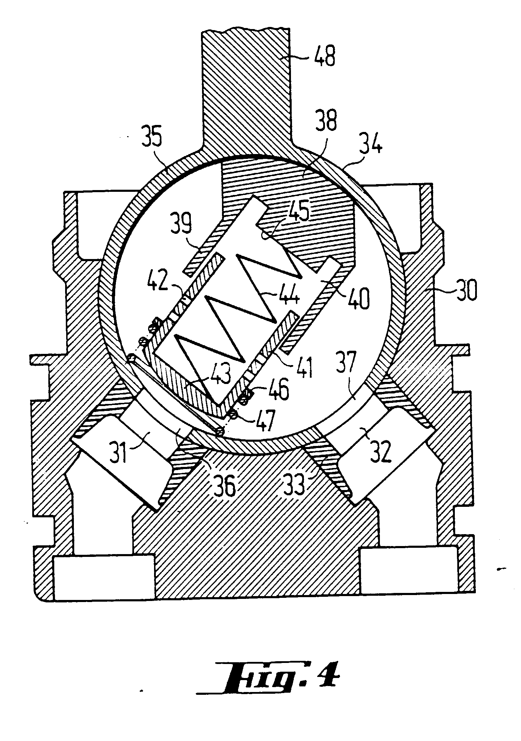

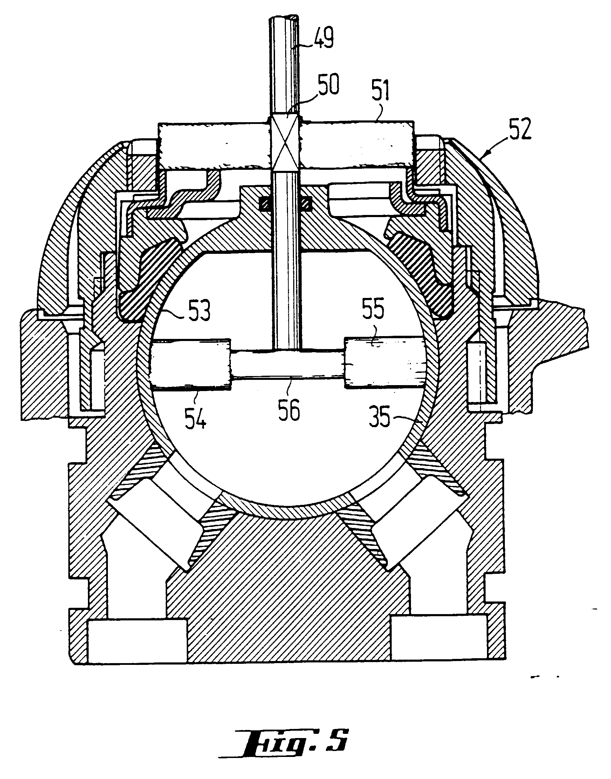

Fig. 5 zeigt wiederum ein Mischventil mit einem Kugelküken, das in ähnlicher Weise aufgebaut ist wie das Mischventil der Fig. 4. Während jedoch bei dem Mischventil der Fig. 4 die Betätigung des normalen Mischvorgangs über einen mit dem Kugelküken verbundenen Ansatz 48 erfolgt, ist bei dem Kugelküken der Fig. 5 eine zentrale Betätigungsstange 49 vorgesehen, die durch eine abgedichtete Öffnung des Kugelkükens 35 hindurchgeht und gegenüber dem Kugelküken 35 verdrehbar ist.

Die Betätigungsstange 49 weist einen Vierkantabschnitt 50 auf, der in einer Kulissenführung 51 geführt ist. Eine Verdrehung der Betätigungsstange 49 führt ebenfalls zu einer Verdrehung der Kulissenführung 51 gegenüber dem Ventilgehäuse 52. Die beim Verdrehen der Betätigungsstange 49 auftretende Verdrehung des Kugelkükens 35 geschieht dadurch, daß an der Innenwand 53 des Kugelkükens etwa in Höhe des Äquators zwei Ansätze 54, 55 angebracht sind, auf die ein am inneren Ende der Betätigungsstange 49 angebrachter Quersteg 56 einwirkt. Einzelheiten dieser Art der Betätigung gehen aus Fig. 6 hervor, die einen Querschnitt durch das Kugelküken der Anordnung der Fig. 5 darstellt. Die beiden Ansätze 54, 55 sind gegenüber einer Axialebene etwas zur einen Seite versetzt. Der Quersteg 56 weist zwei in einer Ebene liegende Flügel 57 auf, die parallel zu den ebenfalls in einer Ebene liegenden Ansätzen 54, 55 angeordnet sind und von diesen einen Abstand aufweisen. Zwischen dem flügelartigen einen Ende des Querstegs 56 und dem einen Ansatz 54 erstreckt sich eine Schraubendruckfeder 58 aus SMA, während auf der gegenüberliegenden Seite eine Schraubendruckfeder 59 aus Federstahl angeordnet ist. Bei normaler Temperatur unterhalb des kritischen Werts haben beide Federn die gleiche Federkraft, so daß sich ein Gleichgewichtszustand einstellt, der der Anordnung der Fig. 6 entspricht. Wird nun die Betätigungsstange 49 zum Ändern der Temperatur verdreht, so verdreht sich zunächst der Quersteg 56, der mit der Betätigungsstange 49 fest verbunden ist, mit. Die Kugel 35 folgt aufgrund der Federkraft nach. Mit Verdrehung der Betätigungsstange 49 verdreht sich ebenfalls die Kulissenführung 51, und zwar aufgrund des mechanischen Eingriffs sofort.

Tritt nun innerhalb des Kugelkükens 35 eine Mischtemperatur auf, die den kritischen Wert erreicht, so entwickelt die SMA-Feder 58 plötzlich eine größere Federkraft, die versucht, die Parallelstellung zwischen Quersteg 56 und Ansätzen 54, 55 zu ändern, also eine Verdrehung zwischen Quersteg 56 und Kugelküken 35 herzustellen. Da die Kulissenführung 51 aber relativ schwergängig ist, während die Verdrehung des Kugelkükens 35 leichtgängiger ist, führt diese Vergrößerung der Federkraft der SMA-Feder 58 dazu, daß sich das Kugelküken 35 bei feststehend bleibender Betätigungsstange 49 verdreht. Diese Verdrehung des Kugelkükens bedeutet aber je nach Anordnung der Öffnungen entweder ein Verschließen des Mischventils oder ein Verdrehen in Richtung auf kalte Temperatur. In beiden Fällen wird also durch Bewegen des Steuerelements des Mischventils ein Verbrühschutz durchgeführt. Auch hier erfolgt dann, wenn die Temperatur am Heißwassereinlaß wieder sinkt, wieder ein Zurückstellen.

## Patentansprüche

1. Einhebelmischventil mit
1.1 einem Ventilgehäuse (25, 52), das
1.1.1 eine feststehende Steuerfläche (5) und
1.1.2 eine Einlaßöffnung (2, 31) für Warmwasser und eine Einlaßöffnung (3, 32) für kaltes Wasser aufweist,
1.2 einem die Menge und die Temperatur des das Ventil verlassenden Wassers steuernden Steuerelement (7), das
1.2.1 gegenüber dem Gehäuse (25, 52) in zwei Freiheitsgraden bewegbar angeordnet ist und
1.2.2 eine mit der feststehenden Steuerfläche (5) zusammenwirkende bewegbare Steuerfläche (14) aufweist, sowie mit
1.3 einem Verbrühschutz, der
1.3.1 an dem Steuerelement (7) angeordnet und
1.3.2 derart ausgebildet ist, daß er bei Überschreiten einer bestimmten Temperatur den Wasserdurchtritt durch eine warmes Wasser führende Öffnung (2, 31, 36), verringert bis verhindert, dadurch gekennzeichnet, daß der Verbrühschutz zum Verschließen einer Einlaßöffnung (2, 31) für das Warmwasser ausgebildet ist.

2. Mischventil nach Anspruch 1, bei dem der Verbrühschutz ein der Temperatur des Wassers stromab der Einlaßöffnung (2, 31) des Warmwassers ausgesetztes temperaturempfindliches Element (12) aufweist.

3. Mischventil nach Anspruch 2, bei dem das temperaturempfindliche Element derart ausgebildet ist, daß es bei Temperaturänderung eine mechanische Bewegung durchführt.

4. Mischventil nach einem der vorhergehenden Ansprüche, mit einem an dem Steuerelement (7), insbesondere der bewegbaren Steuerfläche (14), angeordneten, dieser gegenüber bewegbaren von dem temperaturempfindlichen Element beaufschlagten Ventilelement (13, 43).

5. Mischelement nach Anspruch 4, bei dem das Ventilelement (13, 43) zum Verschließen der in der feststehenden Steuerfläche (6) mündenden Einlaßöffnung (2, 31) für Warmwasser ausgebildet ist.

6. Mischelement nach einem der Ansprüche 4 oder 5, bei dem das Ventilelement (13, 43) zum Verschließen einer Eingangsöffnung (36) für das Warmwasser in der bewegbaren Steuerfläche (14) ausgebildet ist.

7. Mischventil nach einem der vorhergehenden Ansprüche, mit einem von dem temperaturempfindlichen Element (12) beaufschlagten Betätigungselement (18), das zur Bewegung des Steuerelements (7) und/oder der bewegbaren Steuerfläche (14) ausgebildet und angeordnet ist.

8. Mischventil nach Anspruch 7, bei dem das von dem temperaturempfindlichen Element (12) beaufschlagte Betätigungselement (18) an dem Gehäuse (25, 52) angeordnet ist.

9. Mischventil nach Anspruch 7, bei dem das von dem temperaturempfindlichen Element (12) beaufschlagte Betätigungselement (18) an dem Steuerelement (7) angeordnet ist.

10. Mischventil nach einem der Ansprüche 7 bis 9, bei dem das Betätigungselement (18) derart ausgebildet ist, daß es das Steuerelement (7) in Richtung eines Verschließens des Mischventils bewegt.

11. Mischventil nach einem der Ansprüche 7 bis 10, bei dem das von dem temperaturempfindlichen Element (12) beaufschlagte Betätigungselement (18) derart ausgebildet ist, daß es das Steuerelement (7) in Richtung einer Temperaturverringerung des Mischventils bewegt.

12. Mischventil nach einem der vorhergehenden Ansprüche, enthaltend zwei flache, insbesondere ebene Steuerscheiben (1, 6), wobei insbesondere das temperaturempfindliche Element (12) in einer Steuerausnehmung (9, 10) der bewegbaren Steuerscheibe (6) und/oder des Steuerelements (7) angeordnet ist.

13. Mischventil nach einem der Ansprüche 1 bis 11, bei dem die Steuerflächen (5, 14) Kugelflächen sind und insbesondere das temperaturempfindliche Element in dem Inneren eines Kugelkükens (35) angeordnet ist.

14. Mischventil nach einem der Ansprüche 3 bis 13, bei dem als temperaturempfindliches Element (12) ein sich bei Temperaturänderung mechanisch änderndes Element aus Memory-Legierung SMA, insbesondere eine Feder (22, 44, 58) aus Memory-Legierung SMA vorgesehen ist.

## Claims

1. Single-lever mixer valve with
1.1 a valve housing (25, 52), which has
1.1.1 a fixed control surface (5) and
1.1.2 an intake (2, 31) for hot water and an intake (3, 32) for cold water,
1.2 a control element (7) controlling the quantity and temperature of the water leaving the valve,
1.2.1 which is movable in two degrees of freedom relative to the housing (25, 52) and
1.2.2 has a movable control surface (14) cooperating with the fixed control surface (5), as well as with
1.3 a scalding protection, which
1.3.1 is located on the control element (7) and
1.3.2 is constructed in such a way that on exceeding a given temperature it reduces or prevents the passage of water through a hot water-carrying opening (2, 31, 36), characterized in that the scalding protection is constructed for closing an intake (2, 31) for the hot water.

2. Mixer valve according to claim 1, wherein the scalding protection has a temperature-sensitive element (12) exposed to the temperature of the water downstream of the hot water intake (2, 31).

3. Mixer valve according to claim 2, wherein the temperature-sensitive element is so constructed that it performs a mechanical movement in the case of a temperature change.

4. Mixer valve according to one of the preceding claims with a valve element (13, 43) located on the control element (7), particularly the movable control surface (14) subject to the action of the temperature-sensitive element and movable with respect to the control surface.

5. Mixer valve according to claim 4, wherein the valve element (13, 43) is constructed for closing the hot water intake (2, 31) issuing into the fixed control surface (6).

6. Mixer valve according to one of the claims 4 or 5, wherein the valve element (13, 43) is constructed for closing a hot water intake (36) in the movable control surface (14).

7. Mixer valve according to one of the preceding claims, wherein an operating element (18) subject to the action of the temperature-sensitive element (12) is constructed and arranged for moving the control element (7) and/or the movable control surface (14).

8. Mixer valve according to claim 7, wherein the operating element (18) subject to the action of the temperature-sensitive element (12) is located on the housing (25, 52).

9. Mixer valve according to claim 7, wherein the operating element (18) subject to the action of the temperature-sensitive element (12) is located on the control element (7).

10. Mixer valve according to one of the claims 7 to 9, wherein the operating element (18) is so constructed that it moves the control element (7) in the direction of a closure of the mixer valve.

11. Mixer valve according to one of the claims 7 to 10, wherein the operating element (18) subject to the action of the temperature-sensitive element (12) is so constructed that it moves the control element (7) in the direction of a temperature reduction of the mixer valve.

12. Mixer valve according to one of the preceding claims containing two flat, particularly planar control disks (1, 6) and in particular the temperature-sensitive element (12) is located in a control recess (9, 10) of the movable control disk (6) and/or the control element (7).

13. Sanitary valve according to one of the claims 1 to 11, wherein the control surfaces (5, 14) are spherical surfaces and in particular the temperature-sensitive element is located in the interior of a ball plug (35).

14. Sanitary valve according to one of the claims 3 to 13, wherein the temperature-sensitive element (12) is constituted by a shape memory alloy (SMA) element, particularly a shape memory alloy (SMA) spring (22, 44, 58), which mechanically changes in the case of a temperature change.

## Revendications

1. Robinet mitigeur à un levier muni
1.1 d'une enveloppe de robinetterie (25, 52), qui présente
1.1.1 une surface de commande fixe (5) et
1.1.2 une ouverture d'arrivée (2, 31) pour l'eau chaude, et une ouverture d'arrivée (3, 32) pour l'eau froide,
1.2 un élément de commande (7), qui pilote le volume et la température de l'eau chaude sortant du robinet (1, 21) et qui est disposé de manière mobile par rapport à l'enveloppe (25, 52) suivant deux degrés de liberté et
1.2.2 présente une surface de commande mobile (14) coopérant avec la surface de commande fixe (5), ainsi
1.3 que d'une protection anti-brûlure qui
1.3.1 est disposée sur l'élément de commande (7) et
1.3.2 et qui est prévue pour diminuer, voire empêcher le passage de l'eau par une ouverture (2, 31, 36), guidant l'eau chaude, quand une certaine température est dépassée, caractérisé en ce que la protection anti-brûlure est conçue pour la fermeture d'une ouverture d'arrivée (2, 31) de l'eau chaude.

2. Robinet mitigeur selon la revendication 1, selon laquelle la protection anti-brûlure présente un élément thermosensible (12) exposé à la température de l'eau en aval de l'ouverture d'arrivée (2, 31) de l'eau chaude

3. Robinet mitigeur selon la revendication 2, selon laquelle l'élément thermosensible est conçu de manière à exécuter un mouvement mécanique au changement de température.

4. Robinet mitigeur selon l'une des revendications précédentes, muni d'un élément formant valve (13, 43), qui est disposé sur l'élément de commande (7), en particulier sur la surface mobile de commande (14), qui est mobile par rapport à cette dernière et qui subit l'impact de l'élément thermosensible (13, 43).

5. Elément mitigeur selon la revendication 4, selon laquelle l'élément formant valve (13, 43) est conçu pour la fermeture de l'ouverture d'arrivée (2, 31) de l'eau chaude débouchant dans la surface de commande fixe (6).

6. Elément mitigeur selon l'une des revendications 4 ou 5, selon laquelle l'élément formant valve (13, 43) est conçu pour la fermeture d'une ouverture d'arrivée (36) pour l'eau chaude dans la surface de commande mobile (14).

7. Robinet mitigeur selon l'une des revendications précédentes, muni d'un élément d'actionnement (18), subissant l'impact de l'élément thermosensible (12), conçu et disposé en vue du déplacement de l'élément de commande (7) et/ou de la surface mobile de commande (14).

8. Robinet mitigeur selon la revendication 7, selon laquelle l'élément d'actionnement (18) subissant l'impact de l'élément thermosensible (12) est disposé sur l'enveloppe (25, 52).

9. Robinet mitigeur selon la revendication 7, selon laquelle l'élément d'actionnement (18) subissant l'impact de l'élément thermosensible (12) est disposé sur l'élément de commande (7).

10. Robinet mitigeur selon l'une des revendications 7 à 9, selon laquelle l'élément d'actionnement (18) est conçu de manière à déplacer l'élément de commande (7) dans le sens d'une fermeture du robinet mitigeur.

11. Robinet mitigeur selon l'une des revendications 7 à 10, selon laquelle l'élément d'actionnement (18) subissant l'impact de l'élément thermosensible (12) est conçu de manière à déplacer l'élément de commande (7) dans le sens d'une diminution de la température du robinet mitigeur.

12. Robinet mitigeur selon l'une des revendications précédentes, comprenant deux cames de commande plates (1, 6) en particulier planes, l'élément thermosensible (12) étant disposé en particulier dans un évidement de commande (9, 10) de la came de commande mobile (6) et/ou de l'élément de commande (7).

13. Robinet mitigeur selon l'une des revendications 1 à 11, selon laquelle les surfaces de commande (5, 14) sont des surfaces sphériques et en particulier l'élément thermosensible est disposé à l'intérieur d'un boisseau sphérique (35).

14. Robinet mitigeur selon l'une des revendications 3 à 13, selon laquelle il est prévu, en tant qu'élément thermosensible (12), un élément subissant une modification mécanique avec la variation de la température et réalisé en alliage à mémoire SMA, en particulier un ressort (22, 44, 58) en alliage à mémoire (SMA).
